# EUROPÄISCHE PATENTSCHRIFT

(11) **EP 0 504 571 B1**
(45) Veröffentlichungstag und Bekanntmachung des Hinweises auf die Patenterteilung: **17.01.1996**
(21) Anmeldenummer: 92101928.7
(22) Anmeldetag: 05.02.1992
(51) Int. Cl.: B29C 45/16

(54) **Werkzeug zum Mehrkomponenten-Spritzgiessen von Bürstenkörpern**
Mould for injection moulding of multicomponent brush bodies
Moule pour le moulage par injection de corps de brosse à plusieurs composants

(30) Priorität: 22.03.1991 DE 9103553 U
(43) Veröffentlichungstag der Anmeldung: 23.09.1992
(73) Patentinhaber: G.B. BOUCHERIE, N.V., B-8870 Izegem (BE)
(72) Erfinder: Jacobs, Gabriel, B-9041 Oostakker (BE); Boucherie, Leonel P., B-8870 Izegem (BE)
(74) Vertreter: Degwert, Hartmut, Dipl.-Phys.

(56) Entgegenhaltungen:
- WO-A-87/01329
- WO-A-90/08637
- DE-A- 2 063 850
- FR-A- 2 141 799
- US-A- 2 923 035

## Beschreibung

Die Erfindung betrifft ein Werkzeug zum Mehrkomponenten-Spritzgießen von Bürstenkörpern, insbesondere Zahnbürstenkörpern, mit zwei aufeinander zu und voneinander fort bewegbaren Werkzeugteilen, die gemeinsam mehrere Formhohlräume bilden.

Bürstenkörper aus Kunststoffen, insbesondere Zahnbürstenkörper, werden gewöhnlich durch Spritzgießen hergestellt. In jüngster Zeit hat sich ein Bedarf für aus mehreren Komponenten gespritzte Bürstenkörper gezeigt. Die verschiedenen Komponenten können von unterschiedlicher Beschaffenheit und/oder verschiedener Farbe sein. Beispielsweise sind bei einem Zahnbürstenkörper im Bereich des Stiels bestimmte Zonen aus einer die Griffigkeit fördernden Komponente gespritzt, die sich zugleich durch ihre Farbe von allen übrigen Teilen des Zahnbürstenkörpers abheben. Es ist auf diese Weise auch möglich, einen Schriftzug abriebfest und unverwischbar in den Bürstenstiel einzuarbeiten.

Für das Mehrkomponenten-Spritzgießen von becherförmigen Formteilen ist es bereits aus der DE-A-20 63 850 bekannt, in einem Werkzeug Formhohlräume für beide Komponenten anzuordnen und die mit der ersten Komponente gespritzten Vorformlinge mittels eines Halters, der am Rand der Becherform angreift und eine kombinierte Hub-Drehbewegung ausführt, zwischen den Formhohlräumen umzusetzen. Gegenstände wie Zahnbürstenkörper verfügen aber nicht über einen solchen, von außen erfaßbaren Rand und sollen in der Regel an verschiedenen Stellen die eine oder andere oder auch mehrere Komponenten aufweisen können. Daher sind herkömmliche Werkzeuge zum Mehrkomponenten-Spritzgießen von Zahnbürsten sehr aufwendig. Sie bestehen aus zwei Formhälften, von denen die eine um 180° relativ zur anderen verdrehbar ist, um einen aus der ersten Komponente gespritzten Vorformling in Gegenüberlage zu einem Formhohlraumteil in der feststehenden Werkzeughälfte zum Spritzen der zweiten Komponente zu bringen. Gleichzeitig wird ein leerer Formhohlraumteil der verdrehbaren Werkzeughälfte in Gegenüberlage zu einem Formhohlraumteil der feststehenden Werkzeughälfte zum Spritzen der ersten Komponente gebracht. Die Formhohlraumteile in der drehbaren Werkzeughälfte müssen somit wechselweise mit Formhohlraumteilen für verschiedene Komponenten in der feststehenden Werkzeughälfte zusammenwirken und daher für das Spritzen beider Komponenten ausgebildet sein. Dies macht die Verwendung von Schiebern und/oder feststehenden Formkernen erforderlich, um bestimmte Gebiete im Formhohlraum abschließen oder öffnen zu können. Wegen des wechselweisen Zusammenwirkens der Formhohlraumteile in der verdrehbaren Werkzeughälfte mit verschiedenen Formhohlraumteilen der feststehenden Werkzeughälfte ist es erforderlich, daß die Formhohlraumteile der verdrehbaren Werkzeughälfte streng symmetrisch und vollkommen gleich ausgebildet sind. Bei Werkzeugen zur Herstellung von Zahnbürstenkörpern ist diese Forderung besonders gravierend, denn Zahnbürstenkörper werden gewöhnlich mit vorgeformten Löchern für die Borstenbündel im Kopfbereich der Bürste gespritzt. Die drehbare Werkzeughälfte wird in ihren Formhohlraumteilen mit einer relativ großen Anzahl von beispielsweise 40 Stiften versehen, die über Schieber betätigt werden. Während der Drehung der einen Werkzeughälfte bleiben die Vorspritzlinge an den herausragenden Stiften hängen und sind so für den Transport gesichert. Es ist jedoch nur mit sehr hohem Aufwand möglich, je zwei Formhohlraumteile mit einer Vielzahl von schieberbetätigten Stiften streng symmetrisch in einer Werkzeughälfte auszubilden.

Nun werden aber üblicherweise in einer Werkzeughälfte mehrere Formhohlräume parallel nebeneinander angeordnet, um gleichzeitig mehrere Bürstenkörper spritzen zu können. Da die Forderung nach strenger Symmetrie für alle Formhohlraumteile einer Werkzeughälfte und zusätzlich die Forderung nach genauer, wechselseitiger Gegenüberlage mit den Formhohlraumteilen der feststehenden Werkzeughälfte besteht, sind Werkzeuge dieser Art nur unter extrem hohem Aufwand herstellbar.

Da schließlich für die Kühlung der drehbaren Werkzeughälfte eine Kühlflüssigkeit durch Kühlbohrungen in derselben strömen muß und die Zu- und Abführung zu diesen Kühlbohrungen nur über eine zentrale Welle erfolgen kann, sind Drehkupplungen erforderlich, die prinzipiell die Gefahr von Undichtigkeiten bergen und den erforderlichen Aufwand zur Herstellung des Werkzeugs weiter steigern.

Aus der US-A- 2 923 035 ist bereits ein Werkzeug zum Mehrkomponenten-Spritzgießen von Bürstenkörpern bekannt, bei dem je eine Werkzeugeinheit zum Spritzen einer der Komponenten vorgesehen ist und in jeder Werkzeugeinheit mehrere gleiche Formhohlräume nebeneinander angeordnet sind. Jede Werkzeugeinheit besteht aus zwei relativ zueinander beweglichen Werkzeugteilen, welche die Formhohlräume gemeinsam abgrenzen. In der formgebenden Fläche des einen Werkzeugteils ist jeweils eine Aussparung gebildet, die durch ein relativ zu dem Werkzeugteil bewegliches Einsatzelement verschließbar ist, an dem ein stiftförmiger Ansatz gebildet ist. Dieser Ansatz ragt bei durch das Einsatzelement verschlossenem Formhohlraum in diesen hinein. Das Einsatzelement ist an einem Träger befestigt, mittels welchem die Vorformlinge, die in der einen Werkzeugeinheit gespritzt wurden, in die Formhohlräume der Werkzeugeinheit eingebracht werden können. Bei diesem Werkzeug zum Mehrkomponenten-Spritzgießen ist weder eine verdrehbare Werkzeughälfte, noch eine strenge Symmetrie der Formhohlraumteile in einer drehbeweglichen Werkzeughälfte erforderlich. Durch die Verwendung von zwei getrennten Werkzeugeinheiten zum Spritzen der verschiedenen Komponenten ist aber eine rationelle Herstellung nicht möglich. Außerdem sind bei dem bekannten Werkzeug die Einsatzelemente jeweils als Leiste ausgebildet, die sich nahezu über die gesamte Länge Vorformlings erstreckt. Da diese Leiste auf ihrer dem Formhohlraum zugewandten Seite eine formgebende Fläche bildet, an welcher der Vorformling anliegt, ergibt sich eine starke Beschränkung hinsichtlich der zweiten Komponente, die in dem von der Leiste abgedeckten Bereich nicht eingespritzt werden kann.

Die Erfindung geht von dem Stand der Technik nach der US-A-2 923 035 aus, dessen Gattung im Oberbegriff des Patentanspruchs 1 angegeben ist. Um eine rationelle Herstellung zu ermöglichen und zugleich eine große Freiheit beim Spritzen der zweiten Komponente zu erreichen, ist das Werkzeug erfindungsgemäß dadurch gekennzeichnet, daß in den Werkzeugteilen zwei Gruppen von Formhohlräumen gebildet sind, die verschiedenen Komponenten fest zugeordnet sind, und daß die Einsatzelemente durch eine quer zur Längsrichtung der nebeneinander angeordneten Formhohlräume angeordnete, am Träger befestigte Leiste gebildet sind.

Es ist somit ersichtlich, daß:
a) der bewegliche Werkzeugteil lediglich eine Hubbewegung ausführen muß, Drehkupplungen also entfallen können;
b) die Formhohlraumteile des beweglichen Werkzeugteils verschieden ausgebildet sein können, also nicht streng symmetrisch sein müssen, was bei Anwendung auf die Herstellung von Zahnbürstenkörpern besonders vorteilhaft ist, weil nur ein Formhohlraumteil mit schieberbetätigten Stiften zur Ausbildung der Löcher für die Borstenbündel ausgestattet werden muß;
c) die Herstellungsgeschwindigkeit gesteigert werden kann, weil zur Umsetzung der Vorformlinge zwischen den Formhohlräumen nur geringe Massen mit einer günstigen Kinematik bewegt werden müssen.
d) das Einsatzelement, da es durch eine quer zur Längsrichtung des Formhohlraumes angeordnete Leiste gebildet ist, nur einen geringen Teil der formgebenden Fläche des betreffenden Formhohlraumes ein nimmt.

Um den Ansatz aus dem Vorformling leicht entfernen zu können, nachdem der Vorformling in den Formhohlraum für die andere Komponente eingebracht wurde, wird bei einer bevorzugten Weiterbildung der Erfindung ein Halter verwendet, durch den der Vorformling in dem der anderen Komponente zugeordneten Formhohlraum arretierbar ist; es muß dann lediglich das Einsatzelement mit dem Träger durch eine Hubbewegung von dem Vorformling fortbewegt werden, so daß der Ansatz des Einsatzelementes aus diesem herausgezogen wird.

Weitere Vorteile und Merkmale der Erfindung ergeben sich aus der folgenden Beschreibung und aus der Zeichnung, auf die Bezug genommen wird. In der Zeichnung zeigen:
- Die Figu. 1 bis 7: Schnittansichten des Werkzeugs in verschiedenen Betriebszuständen;
- Fig. 8: eine schematische Draufsicht auf die mit Formhohlräumen versehene Seite des einen Werkzeugteils; und
- Fig. 9: eine vergrößerte Schnittansicht entlang Linie IX-IX in Fig. 8.

Das Werkzeug besteht aus einem feststehenden Werkzeugteil 10 und einem beweglichen, nämlich translationsverschiebbaren Werkzeugteil 12. Die Werkzeugteile 10, 12 bilden einen oberen Formhohlraum 14 und einen unteren Formhohlraum 16. Der Ausgang eines ersten Spritzaggregates 18, welches die erste zu spritzende Komponente liefert, mündet in den unteren Formhohlraum 16; der Ausgang eines zweiten Spritzaggregates 20, welches die zweite zu spritzende Komponente liefert, mündet in den oberen Formhohlraum 14. Wie aus den Figuren ohne weiteres ersichtlich ist, handelt es sich um ein Werkzeug zur Herstellung von Zahnbürstenkörpern. Die Formhohlräume 14, 16 sind miteinander fluchtend angeordnet, jedoch gegeneinander um 180° verdreht, so daß die Bereiche der Formhohlräume, in denen der Stiel des Zahnbürstenkörpers geformt wird, einander benachbart liegen. Der untere Formhohlraum 16 ist der ersten zu spritzenden Komponente fest zugeordnet. Er weist nur solche formgebenden Teile auf, die zur Formung der ersten Komponente bestimmt sind. In demjenigen Bereich des Formhohlraums 16, in welchem der Kopf des Zahnbürstenkörpers gebildet wird, befinden sich in an sich bekannter Weise schieberbetätigte Stifte zur Ausbildung der Löcher für die Borstenbündel. In der formgebenden Fläche des in dem feststehenden Werkzeugteil 10 gebildeten Teils 16a des unteren Formhohlraums 16 ist eine Aussparung 22 gebildet. Diese Aussparung 22 ist durch ein Einsatzelement 24 verschließbar. Ein Ansatz 26 des Einsatzelements 24 ragt in den unteren Formhohlraum 16 hinein.

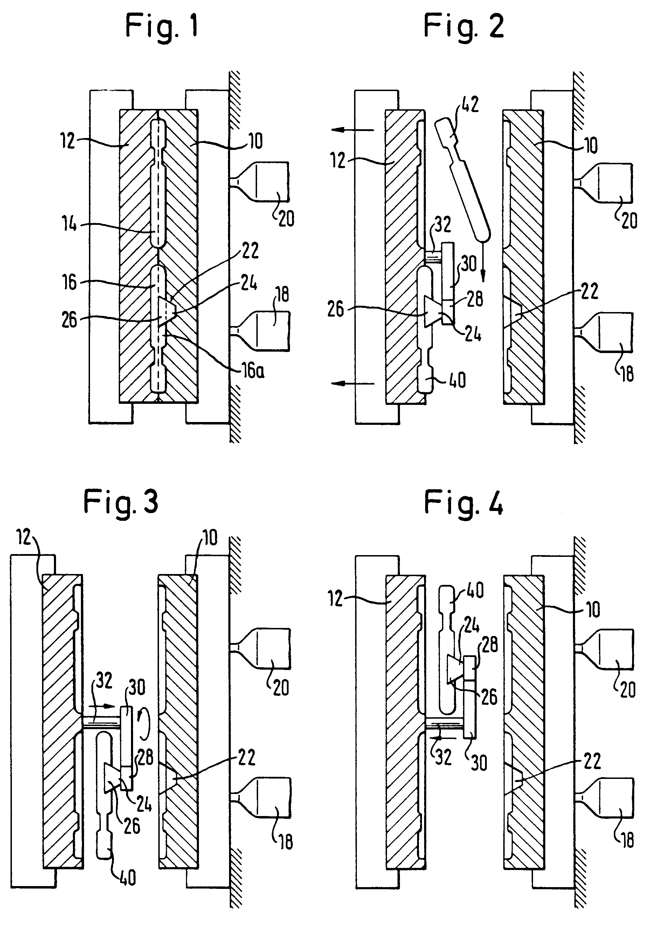

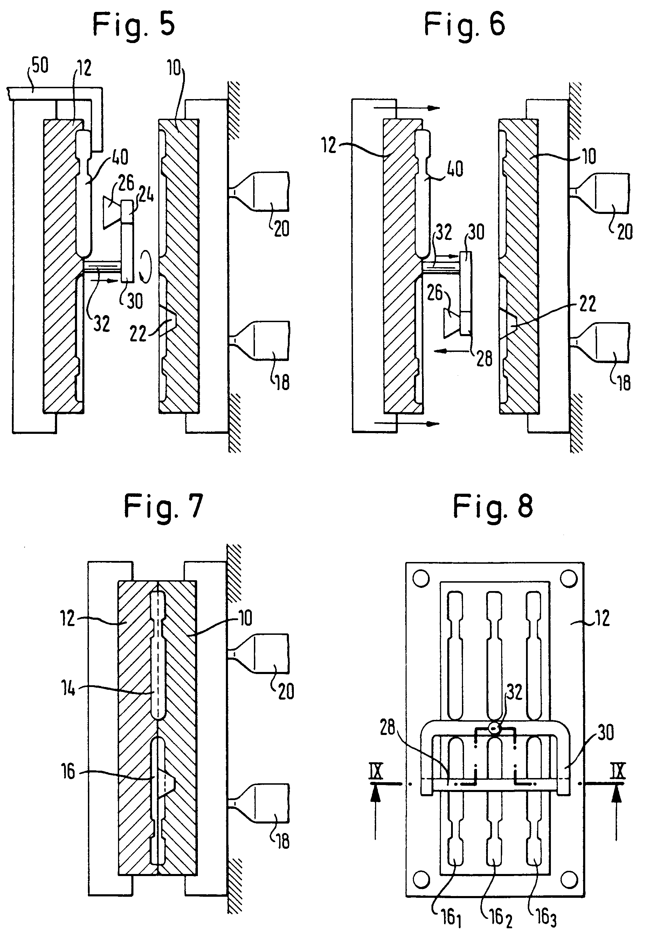

Tatsächlich sind bei der gezeigten Ausführungsform des Werkzeugs insgesamt sechs Formhohlräume vorhanden, wie in Fig. 8 gezeigt ist. Die Fig. 1 bis 7 zeigen jeweils nur zwei einander gegenüberliegende Formhohlräume. Die Einsatzelemente 24 aller Formhohlräume in Fig. 8 bilden eine quer zur Längsrichtung der Formhohlräume verlaufende Leiste 28, die an einem gemeinsamen, bügelförmigen Träger 30 befestigt ist. Der Träger 30 ist am Ende einer drehbaren Welle 32 drehfest befestigt. Die Welle 32 kann sowohl eine Drehbewegung als auch eine Hubbewegung ausführen. Dies ist in den Fig. 3 bis 6 durch Pfeile angedeutet.

Der obere Formhohlraum 14 ist der zweiten zu spritzenden Komponente fest zugeordnet und besitzt nur solche formgebenden Flächen, die zur Formung der zweiten Komponente bestimmt sind. Beispielsweise ist derjenige Bereich des Formhohlraums 14, in welchem der Kopf des Zahnbürstenkörpers aufgenommen wird, gegen den Zutritt der zweiten Komponente verschlossen, wenn die zweite Komponente nur im Bereich des Zahnbürstenstiels vorhanden sein soll. Es ist also insbesondere nicht erforderlich, den Formhohlraum 14 mit schieberbetätigten Stiften, die den Löchern für die Borstenbündel entsprechen, auszustatten.

Bei dem Einsatzelement 24 handelt es sich um ein die Aussparung 22 verschließendes, auf seiner dem Formhohlraum 16 zugewandten Seite formgebendes Teil. Bei geschlossenem Werkzeug füllt das Einsatzelement 24 die Aussparung 22 passend aus. Der Ansatz 26 ragt etwa bis zur Mittelebene des Formhohlraums 16 in diesen hinein.

Es wird nun die Arbeitsweise des Werkzeugs beschrieben.

In dem unteren Formhohlraum 16 wird zunächst aus der ersten Komponente ein Vorformling gespritzt, der in den Fig. 2 bis 6 mit der Bezugszahl 40 bezeichnet ist. In diesem Vorformling sind, verglichen mit dem fertigen Zahnbürstenkörper, bestimmte Bereiche ausgespart, die später durch die zweite Komponente ausgefüllt werden. In dem Formhohlraum 16 wird der Kopfbereich des Vorformlings bereits mit Löchern für die Borstenbündel gespritzt, da schieberbetätigte Stifte in den entsprechenden Bereich des Formhohlraums 16 hineinragen. Der Ansatz 26 wird in den Stielteil des Vorformlings 40 eingeformt.

Anschließend wird, wie in Fig. 2 gezeigt, das Werkzeug geöffnet, indem der Werkzeugteil 12 durch Translationsverschiebung von dem Werkzeugteil 10 entfernt wird. Der in der vorausgehenden Phase (Fig. 1) in dem Formhohlraum 14 durch Einspritzen der zweiten Komponente fertiggestellte Zahnbürstenkörper 42 wird ausgestoßen und fällt herab. Das durch den Träger 30 gehaltene Einsatzelement 24 löst sich bei diesem Vorgang aus der Ausnehmung 22 des Formhohlraumteils 16a, da es der Bewegung des Werkzeugteils 12 folgt.

Die Welle 32 wird nun, wie in Fig. 3 gezeigt, in Richtung zu dem Werkzeugteil 10 vorgeschoben, wobei der Vorformling 40 über den Träger 30, das daran befestigte Einsatzelement 28 und dessen Ansatz 26 aus dem Formhohlraumteil des Werkzeugteils 12 herausgehoben wird. Anschließend wird, wie in Fig. 3 und 4 gezeigt, die Welle 32 um 180° verdreht, so daß der Vorformling 40 nunmehr dem im Werkzeugteil 12 gebildeten Teil des Formhohlraums 14 gegenüberliegt. Durch anschließendes Zurückfahren der Welle 32 wird der Vorformling 40 in diesen Formhohlraumteil eingebracht. Der Vorformling 40 wird nun durch eine in Fig. 5 nur angedeutete Halteeinrichtung 50 an dem Werkzeugteil 12 festgehalten. Die Welle 32 wird erneut, wie in Fig. 5 gezeigt, in Richtung des Werkzeugteils 10 vorgeschoben, wobei der Ansatz 26 aus dem Vorformling 40 herausgezogen wird. Nun wird, wie in Fig. 6 gezeigt, die Welle 32 um 180° gedreht und anschließend zurückgezogen, woraufhin das Werkzeug erneut geschlossen wird, wie in Fig. 7 gezeigt. Es ist nun wieder der in Fig. 1 gezeigte Zustand erreicht. In dem Formhohlraum 16 wird ein neuer Vorformling gespritzt, während der in den Formhohlraum 14 eingebrachte Vorformling durch Einspritzen der zweiten Komponente fertiggespritzt wird.

Wie sich unmittelbar aus Fig. 8 ergibt, werden jeweils drei Vorformlinge gleichzeitig in drei nebeneinanderliegenden Hohlräumen aus der ersten Komponente gespritzt, während in der gegenüberliegenden Reihe von drei benachbarten Formhohlräumen gleichzeitig drei Vorformlinge durch Einspritzen der zweiten Komponente zu den gewünschten Zahnbürstenkörpern fertiggespritzt werden.

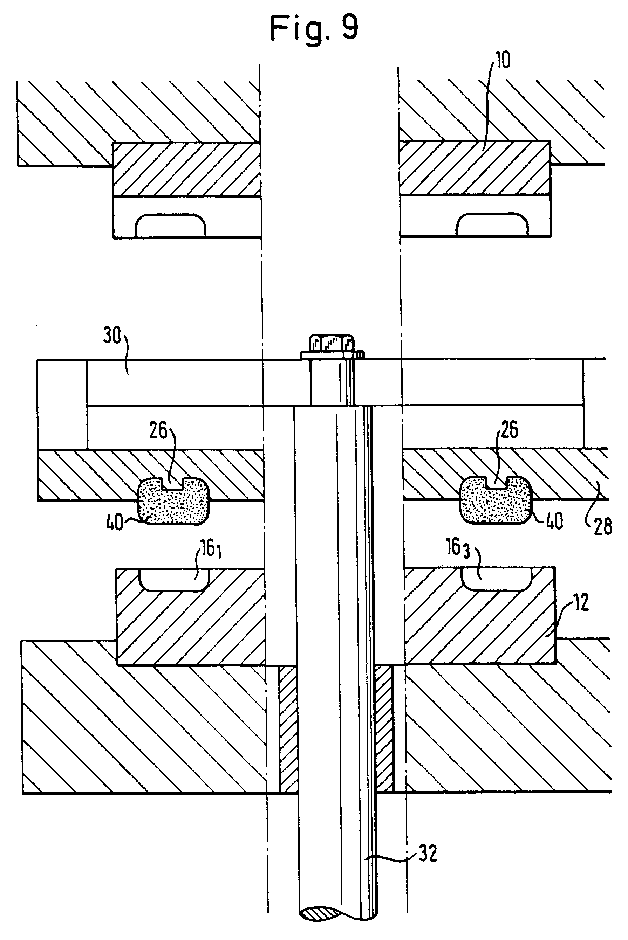

Die Fig. 9 zeigt Einzelheiten des Werkzeugs. Insbesondere zeigen die Fig. 8 und 9 gemeinsam, daß die Einsatzelemente von drei benachbarten Formhohlräumen 16₁, 16₂ und 16₃ gemeinsam die quer zur Längsrichtung dieser Formhohlräume verlaufende Leiste 28 bilden. Diese Leiste 28 ist in ihrem Bereich, der jeweils einem Formhohlraum 16₁, 16₂, 16₃ gegenüberliegt, formbildend ausgestaltet und mit je einem Ansatz 26 versehen. Der in Fig. 9 gezeigte Zustand entspricht etwa dem in Fig. 3: das Werkzeug ist geöffnet, und die Vorformlinge 40 sind aus den Formhohlräumen 16 herausgehoben, aber noch nicht zu den Formhohlräumen 14 zum Spritzen der zweiten Komponente verschwenkt.

Bei der beschriebenen Ausführungsform werden die Zahnbürstenkörper aus nur zwei Komponenten gespritzt. Nach dem gleichen Prinzip können Bürstenkörper auch aus mehr als zwei Komponenten gespritzt werden.

## Patentansprüche

1. Werkzeug zum Mehrkomponenten-Spritzgießen von Bürstenkörpern, insbesondere Zahnbürstenkörpern, mit zwei aufeinander zu und voneinander fort bewegbaren Werkzeugteilen (10,12), die gemeinsam mehrere gleiche, nebeneinander angeordnete Formhohlräume (14,16) bilden, die in der formgebenden Fläche des einen Werkzeugteils (10) jeweils eine Aussparung aufweisen, die durch ein relativ zu diesem Werkzeugteil bewegliches Einsatzelement (24) verschließbar ist, an dem ein Ansatz (26) gebildet ist, der bei durch das Einsatzelement (24) verschlossenem Formhohlraum (16) in diesen hineinragt, wobei das Einsatzelement (24) an einem Träger (30) befestigt ist, mittels welchem ein in einem der zuerst einzuspritzenden Komponente zugeordneten Formhohlraum (16) gespritzter Vorformling (40) in einen einer anderen Komponente zugeordneten Formhohlraum (14) einbringbar ist, **dadurch gekennzeichnet,** daß in den Werkzeugteilen (10,12) zwei Gruppen von Formhohlräumen (14,16) gebildet sind, die verschiedenen Komponenten fest zugeordnet sind, und daß die Einsatzelemente (24) durch eine quer zur Längsrichtung der nebeneinander angeordneten Formhohlräume angeordnete, am Träger (30) befestigte Leiste (28) gebildet sind.

2. Werkzeug nach Anspruch 1, **dadurch gekennzeichnet,** daß jedes Einsatzelement (24) auf seiner den Formhohlräumen (16) zugewandten Seite eine formgebende Fläche aufweist.

3. Werkzeug nach einem der vorstehenden Ansprüche, **dadurch gekennzeichnet,** daß jeder in einen der anderen Komponente zugeordneten Formhohlraum (14) eingebrachte Vorformling (40) durch einen Halter (50) in dem Formhohlraum (14) arretierbar ist, während der Ansatz (26) des Einsatzelements (24) durch Fortbewegen des Einsatzelements (24) von dem Formhohlraum (14) aus dem Vorformling (40) herausgezogen wird.

4. Werkzeug nach einem der vorstehenden Ansprüche, **dadurch gekennzeichnet,** daß die der anderen Komponente zugeordneten Formhohlräume (14) nur solche formgebenden Flächen aufweisen, die der Formgebung für die andere Komponente dienen.

## Claims

1. A tool for the multicomponent injection molding of brush bodies and more particularly of toothbrush bodies, comprising first and second tool parts (10, 12) which are movable towards and away from each other, said tool parts together defining a plurality of identical mold cavities (14, 16) arranged adjacent to each other, each of said mold cavities comprising a recess in the shaping surface of the first tool part (10), which is able to be shut off by an insert element (24) movable in relation to said first tool part, an extension (26) being formed at the insert element, which when the mold cavity (16) is shut off by the insert element (24), extends into the cavity, said insert element (24) being mounted on a carrier (30) by means of which a preform (40) molded in a mold cavity which is associated with the component to be injected firstly, may be moved into another mold cavity (14) associated with another component, characterized in that two groups of mold cavities (14, 16) are formed in the tool parts (10, 12), which are associated with different components, and in that said insert elements (24) are constituted by a rail (28) extending transversely in relation to the longitudinal direction of the mold cavities arranged adjacent each other and being fixed to the carrier (30).

2. The tool as claimed in claim 1, characterized in that each insert element (24) has a shaping surface of the side thereof facing the mold cavities (16).

3. The tool as claimed in any one of the preceding claims, characterized in that each preform (40) introduced into a mold cavity (14) associated with the other component is able to be latched by means of a holder (50) in the mold cavity (14), while the extension (26) of the insert element (24) is pulled out of the preform (40) by movement of the insert element (24) out of the mold cavity (14).

4. The tool as claimd in any one of the preceding claims, characterized in that the mold cavities (14) associated with the other component only have such shaping surfaces as serve for shaping of the other component.

## Revendications

1. Moule pour le moulage par injection multicomposants de montures de brosse, en particulier montures de brosse à dents, comportant deux parties de moule (10,12) mobiles s'approchant l'une de l'autre et s'éloignant l'une de l'autre, qui forment ensemble plusieurs creux de moule (14,16), qui présentent chacun sur la surface de formage d'une partie de moule (10) un évidement, qui peut être fermé par un élément rapporté (24) mobile par rapport à cette partie de moule, et sur lequel est formé un embout (26), qui pénètre dans le creux de moule (16) fermé par l'élément rapporté (24), l'élément rapporté (24) étant fixé à un support (30) au moyen duquel une préforme (40) moulée par injection dans un creux de moule (16) associé au premier composant à mouler par injection peut être amenée dans un creux de moule (14) associé à un autre composant, caractérisé en ce que sont formés dans les parties de moule (10,12) deux groupes de creux de moule (14,16), qui sont associés de façon fixe aux différents composants, et en ce que les éléments rapportés (24) sont formés d'une barre (28) disposée transversalement au sens de la longueur des creux de moule disposés les uns à côté des autres, et fixée au support (30).

2. Moule selon la revendication 1, caractérisé en ce que chaque élément rapporté (24) présente une surface de formage sur son côté tourné vers le creux de moule (16).

3. Moule selon l'une des revendications ci-dessus, caractérisé en ce que chaque préforme (40) introduite dans un creux de moule (14) associé à l'autre composant peut être bloquée dans le creux de moule (14) par une butée (50), tandis que l'embout (26) de l'élément rapporté (24) est retiré de la préforme (40) par un déplacement de l'élément rapporté (24) du creux de moule (14).

4. Moule selon l'une des revendications ci-dessus, caractérisé en ce que les creux de moule (14) associés aux autres composants ne présentent que des surfaces de formage telles que celles servant au formage des autres composants.
